# EUROPÄISCHE PATENTSCHRIFT

(11) **EP 2 022 760 B1**
(45) Veröffentlichungstag und Bekanntmachung des Hinweises auf die Patenterteilung: **16.01.2019**
(21) Anmeldenummer: 08012817.6
(22) Anmeldetag: 16.07.2008
(51) Int. Cl.: C02F 1/00, C02F 101/10, C02F 101/20, C02F 1/50, C02F 1/68

(54) **Filterkartusche für eine Wasserfiltervorrichtung**
Filter cartridge for a water filtration device
Cartouche de filtre pour un dispositif de filtre à eau

(30) Priorität: 16.07.2007 DE 102007003337; 16.07.2007 DE 102007033339
(43) Veröffentlichungstag der Anmeldung: 11.02.2009
(73) Patentinhaber: BWT AG, 5310 Mondsee (AT)
(72) Erfinder: Johann, Jürgen Dr., 69226 Nussloch (DE); Bissen, Monique Dr., 5310 Mondsee (AT); Pichler, Markus, 5020 Salzburg (AT)
(74) Vertreter: Herden, Andreas F.

(56) Entgegenhaltungen:
- EP-A1- 1 752 421
- WO-A1-99/08768
- WO-A1-99/35093
- DE-A1- 3 828 008
- DE-A1-102004 026 167
- DE-A1-102005 042 907
- GB-A- 2 197 647
- JP-A- 10 076 251

## Beschreibung

### Gebiet der Erfindung

Die Erfindung betrifft eine Filterkartusche für eine Wasserfiltervorrichtung, insbesondere für einen drucklosen Haushaltswasserfilter.

### Hintergrund der Erfindung

Filterkartuschen für Wasserfilter, die insbesondere im Haushalt zum Filtrieren und Ionenaustausch verwendet werden, sind bekannt.

So zeigt die deutsche Offenlegungsschrift DE 10 2004 026 176 A1 eine Filterkartusche sowie eine Vorrichtung zur Filtration von Flüssigkeiten. Dabei wird die Filterkartusche in einem korrespondierenden Einsatz geklemmt. Das Wasser wird in eine Art Trichter eingefüllt und durchläuft die Filterkartusche von oben nach unten. Nachdem das Wasser unten austritt, läuft es über einen Stutzen, der zusammen mit der Filterkartusche eine Drosseleinrichtung bildet, in ein vorgesehenes Behältnis. Auf den Offenbarungsgehalt dieses gattungsbildenden Dokumentes wird vollumfänglich Bezug genommen.

Nachteilig an diesem System ist, dass sich insbesondere infolge des Stutzens eine Totwasserzone bildet.

Besonders nachteilig ist, dass sich unterhalb der eingesetzten Filterkartusche eine Totwasserzone bildet, welche nicht mit dem Filtermedium in unmittelbarem Kontakt steht.

Auch bei anderen aus der Praxis bekannten Systemen bestehen Probleme mit der Bildung von Totwasserzonen, vor allem am oberen Kartuschenrand.

DE102005042907A offenbart eine Filterpatrone für eine Wasserfiltervorrichtung, bei der das Wasser nach Strömungsumkehr in ein zentrales absteigendes Rohr hineinfließt und schließlich aus der am Boden der Kartusche angebrachten Öffnung des Rohres 7 herausläuft.

### Aufgabe der Erfindung

Der Erfindung liegt demgegenüber die Aufgabe zugrunde, die vorstehend genannten Nachteile des Standes der Technik zumindest zu reduzieren.

Insbesondere ist es Aufgabe der Erfindung, Totwasserzonen zu reduzieren und Totwasserzonen, die nicht mit dem Filtermedium in unmittelbarem Kontakt stehen, möglichst ganz zu vermeiden.

Eine weitere Aufgabe der Erfindung ist es, den Durchfluss in der Kartusche, welcher sich durch die Höhe der Wassersäule ändert, zu stabilisieren. Insbesondere soll der Durchfluss am Ende des Filtervorgangs, bei welchem kaum oder kein Wasser oberhalb einer Einlauföffnung des Filters steht, auf ein gewünschtes Mindestmaß erhöht werden.

Eine weitere Aufgabe der Erfindung ist es, eine Filterkartusche bereitzustellen, welche mit verschiedenen Filtermedien befüllt werden kann.

Eine weitere Aufgabe der Erfindung ist es, auf besonders einfache Art und Weise eine Filterkartusche bereitstellen zu können, welche den Zusatz von Mineralstoffen, Spurenelementen oder Geschmacksstoffen ermöglicht.

Weiter ist es Aufgabe der Erfindung, eine Filterkartusche bereitstellen zu können, bei welcher Silberionen, welche vom Filtermedium abgegeben werden, am Ende des Filtervorgangs zumindest teilweise wieder entfernt werden.

### Zusammenfassung der Erfindung

Die Aufgabe der Erfindung wird bereits durch eine Filterkartusche für eine Wasserfiltervorrichtung nach Anspruch 1 gelöst.

Bevorzugte Ausführungsformen und Weiterbildungen der Erfindung sind den Unteransprüchen zu entnehmen. Die Erfindung betrifft eine Filterkartusche für eine Wasserfiltervorrichtung. Insbesondere betrifft die Erfindung eine Filterkartusche für einen drucklosen Filter, wie er insbesondere im Haushalt eingesetzt wird, bei welchem das Wasser in einen Trichter oberhalb der Filterkartusche geschüttet wird und nur infolge der Schwerkraft den Filter passiert.

Die Filterkartusche weist ein Gehäuse mit zumindest einem oberen Einlauf und zumindest einem unteren Auslauf auf, wobei zwischen dem Einlauf und dem Auslauf Mittel zur Strömungsumkehr vorgesehen sind.

Die Strömungsumkehr innerhalb der Kartusche ermöglicht, dass das Wasser über einen definierten Auslauf aus der Kartusche austreten kann, ohne dass der Boden der Filterkartusche wasserdurchlässig ausgebildet ist.

Gleichzeitig kann gegebenenfalls der neben einem Einlaufstutzen des Behältnisses vorhandene Raum für das Filtermedium verwendet werden.

Das Gehäuse weist vorzugsweise zumindest eine umlaufende Dichtung auf. So wird verhindert, dass Wasser randseitig an der Kartusche vorbei läuft und Totwasserzonen bildet. In Verbindung mit der vorgesehenen Strömungsumkehr bleibt die Zone, die zwischen dem Boden und dem Rand der Filterkartusche sowie dem Behältnis liegt, in welches die Kartusche eingesetzt wird, trocken.

Die Dichtung ist dabei vorzugsweise im Wesentlichen an einem oberen Rand der Filterkartusche unterhalb des Einlaufs angeordnet.

Bei einer Weiterbildung der Erfindung ist in dem Gehäuse der Filterkartusche zwischen den Mitteln zur Strömungsumkehr und dem Auslauf der Filterkartusche eine weitere Kammer vorgesehen. Diese Kammer, welche vorzugsweise ein geringeres Volumen als die restliche Filterkartusche hat, insbesondere ein Volumen von weniger als einem Drittel der Filterkartusche, ermöglicht eine zum Filtermedium der eigentlichen Filterkartusche nachgeschaltete Wasseraufbereitung.

Insbesondere kann in einer derartigen Kammer ein Medium angeordnet werden, welches Silber, das vom Filtermedium abgegeben wird, adsorbiert. Vorzugsweise ist der Auslauf röhrenförmig ausgestaltet und über einem Boden der Filterkartusche angeordnet. Der Auslauf steht also vorzugsweise nicht über den Boden der Filterkartusche hinaus

Gleichzeitig wird das Wasser über einen röhrenförmigen Auslauf, welcher einem nahezu beliebig ausgestalteten Behältnis angepasst werden kann, aus der Filterkartusche ausgeleitet.

Der Auslauf ist dabei zumindest 2 mm und besonders bevorzugt zumindest 10 mm über dem Boden der Filterkartusche angeordnet.

Das Gehäuse der Filterkartusche ist vorzugsweise im Wesentlichen bis zu einem Gehäuseboden mit dem Filtermedium befüllt. So werden Totwasserzonen weiter reduziert bzw. vermieden.

Eine Filterkartusche für eine Wasserfiltervorrichtung kann zumindest zwei Kammern aufweisen, die zumindest abschnittsweise getrennt sind. Die Kammern sind dabei vorzugsweise im Wesentlichen strömungstechnisch parallel, also nebeneinander angeordnet.

Die beiden voneinander getrennten Kammern können mit verschiedenen Filtermedien befüllt werden.

Um die Filterkartusche besonders einfach ausgestalten zu können, weisen die Kammern vorzugsweise ein gemeinsames Gehäuse auf.

Vorzugsweise sind die Kammern als Wesentlichen nebeneinander anordnete Zylinder oder Kegelstümpfe ausgebildet, welche sich abschnittsweise überschneiden.

So kann die sich ergebende Kerbe zwischen den Kammern beispielsweise zur Integration eines weiteren Einlaufs genutzt werden.

In einer Filterkartusche für eine Wasserfiltervorrichtung kann über dem Einlauf oder nach dem Auslauf oder zwischen dem Einlauf und dem Auslauf eine Kammer mit einem Medium zur Abgabe von Ionen, Geschmacksstoffen und/oder Spurenelementen angeordnet sein.

Eine Filterkartusche für eine Wasserfiltervorrichtung kann einen Saugheber aufweisen.

Der Saugheber ist vorzugsweise am Auslauf der Filterkartusche angeordnet und bildet gleichzeitig eine Strömungsumkehr. Dabei ist der Saugheber in die Filterkartusche integriert.

Über einen Saugheber wird gewährleistet, dass auch am Ende des Filtervorgangs eine hinreichende Durchflussgeschwindigkeit vorliegt und Restwasser möglichst gut aus der Filterkartusche entfernt wird.

Der Auslauf ist vorzugsweise maximal 2 cm und besonders bevorzugt maximal 1 cm über dem Boden der Filterkartusche angeordnet, um die Menge an in der Kartusche verbleibendem Restwasser möglichst gering zu halten.

Weiter kann bei der erfindungsgemäßen Filterkartusche unterhalb des Einlaufs ein weiterer Einlauf angeordnet sein.

Es hat sich herausgestellt, dass sich bevorzugt randseitig und unterhalb von typischerweise im oberen Bereich der Filterkartusche angeordneten Einlauföffnungen Totwasserzonen bildet.

Die Erfinder haben herausgefunden, dass durch einen weiteren Einlauf, welcher vorzugsweise an einer randseitigen Dichtung, die als Rinne ausgebildet ist, dieses Restwasser am Ende des Filtervorgangs in die Kartusche geleitet und so entfernt werden kann.

Dabei grenzt der weitere Einlauf vorzugsweise an eine mit einem Filtermedium gefüllte Kammer an oder ragt in die Kammer hin. Das Restwasser wird also direkt in die Kammer mit dem Filtermedium eingeleitet, wobei der weitere Einlauf vorzugsweise unterhalb des Füllstandes mit einem Filtermedium angeordnet ist.

Weiter kann die erfindungsgemäße Filterkartusche zumindest am Ablauf einen Originalitätsverschluss aufweisen.

Der Originalitätsverschluss ist vorzugsweise als Klebesiegel ausgebildet. Besonders von Vorteil ist eine Kombination mit einer Strömungsumkehr, da bei einer derartigen Kartusche das Wasser über einen definierten, röhrenförmigen Auslauf ausgeleitet werden kann, über welchen auf besonders einfache Art und Weise ein Klebesiegel geklebt werden kann.

Weiter kann bei einer Filterkartusche das Filtermedium derart ausgebildet sein, dass es Mineralstoffe oder Spurenelemente, insbesondere Kalzium oder Magnesium, abgibt.

So können beim Filtern des Wassers gleichzeitig Nahrungsergänzungsstoffe zugesetzt werden. Der Zusatz derartiger Nahrungsergänzungsstoffe erfolgt dabei bevorzugt in einem nach einer Filterstufe angeordneten Bereich, insbesondere in einer weiteren Kammer.

Weiter kann eine Anordnung mit einem Adapter in einer Wasserfiltervorrichtung und einem Kartuscheneinsatz zum Einsatz kommen, wobei der Adapter einen vorzugsweise röhrenförmigen Auslauf aufweist und Adapter und Kartuscheneinsatz gemeinsam eine Strömungsumkehr bilden.

Dies entspricht von der Funktion her im Wesentlichen der zuvor beschriebenen Filterkartusche, wobei Kartuscheneinsatz und Adapter so zusammen wirken, dass sie eine Filterkartusche bilden.

Durch eine Trennung in die zwei Bauteile Adapter und Kartuscheneinsatz wird ermöglicht, dass der Adapter, welcher kein sich verbrauchendes Filtermedium enthält, mehrfach verwendet werden kann und nur der Kartuscheneinsatz ausgewechselt werden muss.

### Kurze Beschreibung der Zeichnungen

Die Erfindung soll im Folgenden anhand der Zeichnungen Fig. 1 bis Fig. 6, welche schematisch dargestellte Ausführungsbeispiele einer Filterkartusche zeigen, näher erläutert werden.
- Fig. 1: zeigt eine schematische, isometrische Ansicht eines Ausführungsbeispiels einer Filterkartusche,
- Fig. 2: zeigt eine schematische Schnittansicht einer Filterkartusche,
- Fig. 3: zeigt eine Detailansicht der Fig. 2,
- Fig. 4: zeigt eine schematische, funktionelle Seitenansicht einer Filterkartusche,
- Fig. 5: zeigt eine weitere Schnittansicht einer Filterkartusche,
- Fig. 6: zeigt eine alternative Ausführungsform einer Filterkartusche in einer Schnittansicht.

### Detaillierte Beschreibung der Zeichnungen

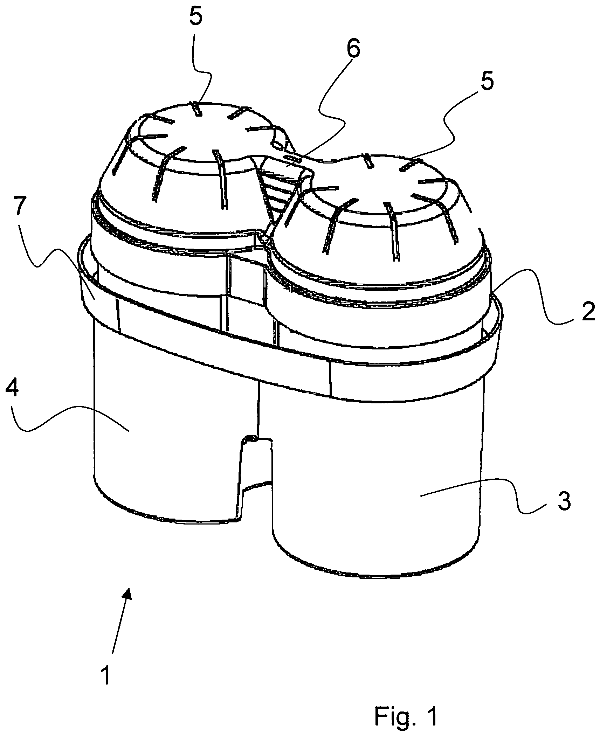

Bezugnehmend auf Fig. 1 sollen die wesentlichen Bestandteile einer Filterkartusche 1 näher erläutert werden.

Die Filterkartusche 1 ist zum Einsatz in eine vorzugsweise im Haushalt zu verwendende Wasserfiltervorrichtung ausgebildet.

Die Filterkartusche 1 umfasst ein Gehäuse 2, welches eine randseitige Dichtung 7 aufweist, mit der die eingesetzte Filterkartusche 1 gegen den Behälter der Wasserfiltervorrichtung (nicht dargestellt) abgedichtet ist.

Oberhalb der randseitigen Dichtung 7 ist ein Kopfteil mit schlitzförmigen Einläufen 5 anordnet.

Um die Filterkartusche 1 leicht entfernen zu können, weist die Filterkartusche 1 ein geriffeltes Griffstück 6 auf.

In diesem Ausführungsbeispiel umfasst die Filterkartusche eine erste Kammer 3 sowie eine zweite Kammer 4, welche nebeneinander angeordnet sind. Die Kammern 3, 4 sind in diesem Ausführungsbeispiel im Wesentlichen kreiszylindrisch ausgebildet.

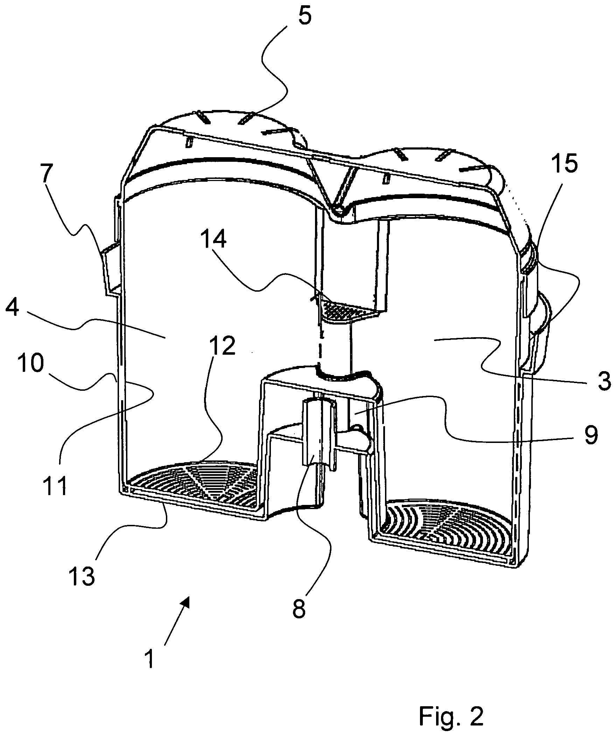

Fig. 2 zeigt eine schematische Schnittansicht der in Fig. 1 dargestellten Filterkartusche anhand der vor allem das Innenleben der Filterkartusche 1 erläutert werden soll. Zu erkennen ist auch hier der Einlauf 5 im Kopfteil.

Weiter ist in dieser Ansicht der im Wesentlichen röhrenförmig ausgebildete Auslauf 8 zu erkennen.

Über dem Auslauf 8 befindet sich eine im Wesentlichen glockenförmige Kammer 9, welche zusammen mit dem Auslauf 8 einen Saugheber bildet.

Das Gehäuse der Filterkartusche 1 umfasst ein äußeres Gehäuse 10 und ein inneres Gehäuse 11. In dem inneren Gehäuse 11 ist das Filtermedium (nicht dargestellt) angeordnet. Inneres und äußeres Gehäuse 11, 10 können dabei fest miteinander verbunden sein. Bei einer alternatives Ausführungsform bildet das innere Gehäuse 11 zusammen mit dem Kopfteil einen Kartuscheneinsatz, der in das äußere Gehäuse 10 gesteckt wird. So ist das äußere Gehäuse 10 als Adapter ausgebildet, die Funktion der Filterkartusche 1 ändert sich im Prinzip aber nicht, es wird aber die Wiederverwendung des so als Adapter ausgebildeten äußeren Gehäuses 11 ermöglicht.

Der Boden 12 des inneren Gehäuses umfasst Schlitze, welche als Auslauf dienen. Über die Schlitze wird das Wasser in den Saugheber eingeleitet.

Der Boden 13 des äußeren Gehäuses 11 umfasst dagegen keine Schlitze, so dass das Wasser nur über den im Wesentlichen röhrenförmig ausgebildeten Auslauf 8 die Filterkartusche 1 verlässt.

Auf diese Weise ist gewährleistet, dass sich unterhalb der Filterkartusche keine Totwasserzone bildet.

Weiter umfasst die Filterkartusche noch einen weiteren Einlauf 14, welcher unterhalb des Einlaufs 5 angeordnet ist.

Der weitere Einlauf 14 grenzt an die umlaufende Dichtung 7 an, welche zugleich eine Rinne 15 bildet.

Restwasser am Ende des Filtervorgangs kann so über die Rinne und den weiteren Einlauf in das Kartuscheninnere eingeleitet werden. Dabei kommt der Funktion die Ausgestaltung der Kartusche mit einer ersten Kammer 3 und einer zweiten Kammer 4 zugute, da zwischen den beiden Kammern der weitere Einlauf 14 auf besonders einfache Weise angeordnet werden kann. Weiter ist der weitere Einlauf 14 unterhalb des Füllstandes des Filtermediums (nicht dargestellt) angeordnet, damit sich ober des Filtermediums keine Totwasserzonen bilden, die nicht mit dem Filtermedium in Kontakt stehen.

In diesem Ausführungsbeispiel sind die Kammern 3 und 4 aber nur im Bereich des Auslaufs 8 voneinander getrennt und weisen kein unterschiedliches Filtermedium (nicht dargestellt) auf.

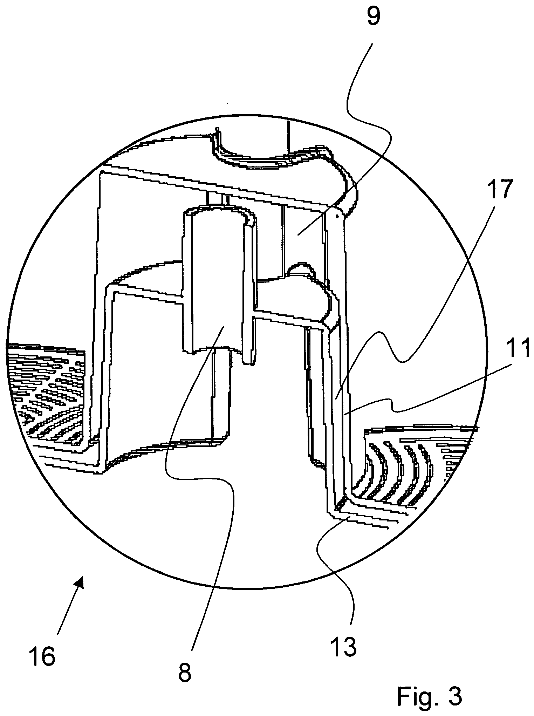

Bezug nehmend auf Fig. 3 sollen die wesentlichen Bestandteile eines Ausführungsbeispiels eines Saughebers 16 näher erläutert werden.

Der Saugheber umfasst einen vorzugsweise im Wesentlichen röhrenförmig ausgebildeten Auslauf 8, über welchem eine Kammer 9 angeordnet ist.

Die Kammer 9 wird im Wesentlichen begrenzt durch den im Mittelteil in die Kartusche geführten Boden des äußeren Gehäuses 13 und den im Wesentlichen im mittleren Bereich glockenförmig ausgebildeten Boden des inneren Gehäuses.

Über einen Kanal 17, der in diesem Ausführungsbeispiel im Wesentlichen durch zwei ineinander geschobene Glocken gebildet wird läuft das Wasser, nachdem es das innere Gehäuse 11 verlassen hat, in die Kammer 9.

Bei einer Weiterbildung der Erfindung ist in der Kammer 9 eine nachgeschaltete Wasseraufbereitung angeordnet.

Insbesondere ist vorgesehen, die Kammer mit einem sogenannten Polishing zu füllen, welches beispielsweise Silberionen, die vom Filtermedium (nicht dargestellt) abgegeben werden, adsorbiert oder Schwermetalle und Arsen herausfiltert.

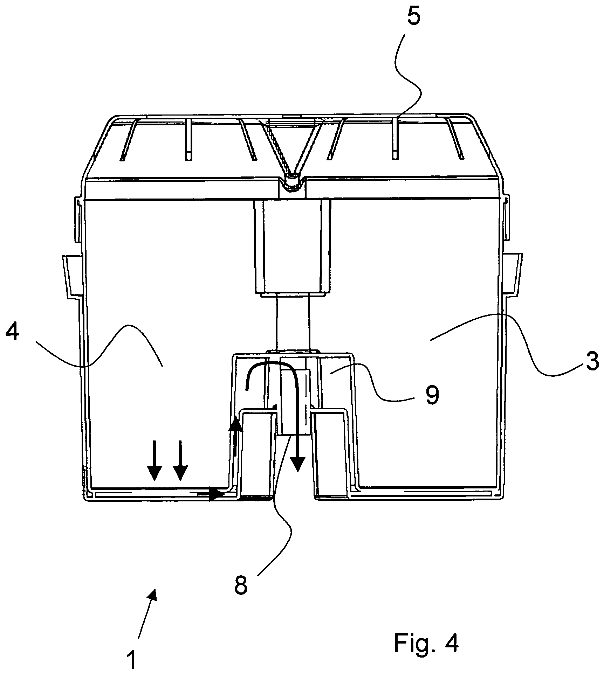

Bezug nehmend auf Fig. 4, in welcher eine Filterkartusche 1 dargestellt ist, soll die Wasserströmung in der Kartusche näher erläutert werden.

Die Filterkartusche 1 umfasst einen Einlauf 5 und einen Auslauf 8 sowie ein Gehäuse, bestehend aus den Kammern 3 und 4.

Das Wasser tritt über den Einlauf 5 in die Filterkartusche 1, sickert durch das Filtermedium (nicht dargestellt und verlässt den siebförmig ausgebildeten Boden der Kammern 3 und 4. Die weitere Strömung des Wassers ist mit Pfeilen markiert, wobei die Strömung nur auf der linken Seite der Kartusche dargestellt ist.

Das Wasser strömt nach Verlassen der Kammer 4 zunächst nach rechts in Richtung Kartuschenmitte. Sodann durchläuft das Wasser die Mittel zur Strömungsumkehr, steigt nach oben in die Kammer 9, um aus der Kammer 9 durch ein vorzugsweise im Wesentlichen röhrenförmig ausgebildeten Auslauf 8 definiert die Kartusche zu verlassen.

Durch geeignete Dimensionierung des Querschnitts 8 des Auslaufs kann so auf besonders einfache Weise der Durchfluss reduziert werden und die Verweilzeit des Wassers auf einen gewünschten Wertebereich eingestellt werden.

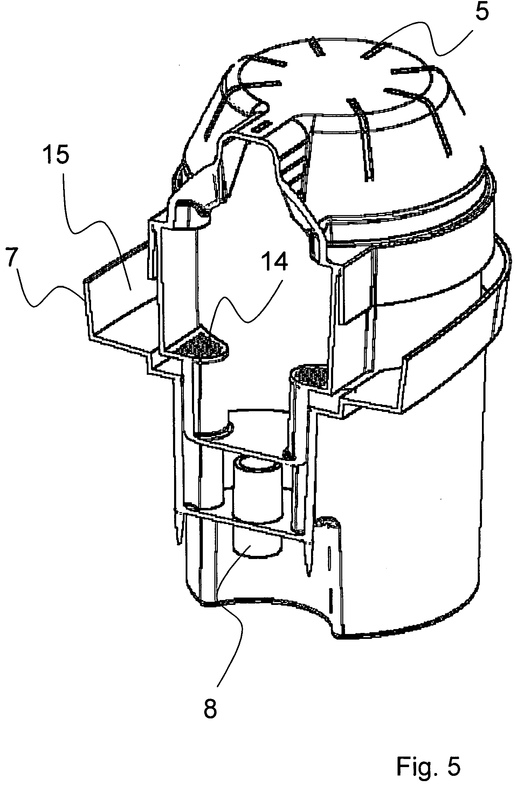

Fig. 5 zeigt eine weitere Schnittansicht einer Filterkartusche.

Zu erkennen ist auch hier der Einlauf 5 sowie der Auslauf 8.

In dieser Darstellung sieht man besonders gut den weiteren Einlauf 14, welcher an die rinnenförmig ausgebildete Dichtung 7 angrenzt. Die Rinne 15 führt stufenförmig zum weiteren Einlauf 14, über welchen Restwasser am Ende des Filtervorgangs in die Kartusche eingeleitet wird.

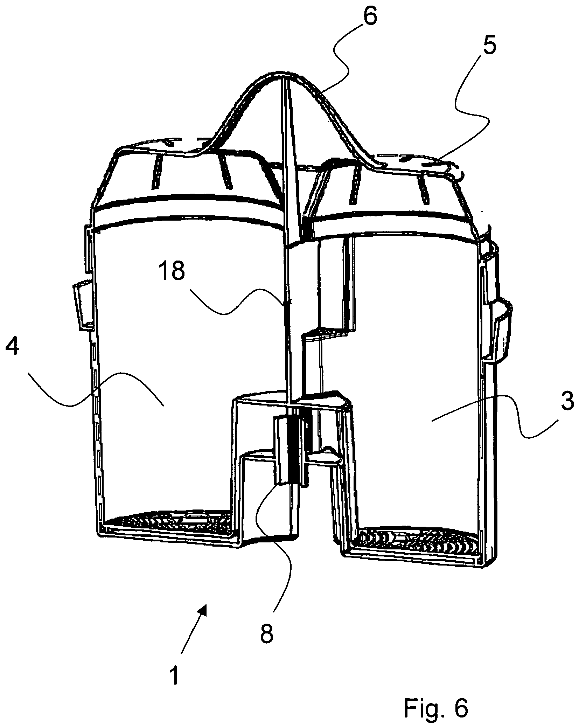

Fig. 6 zeigt schematisch dargestellt eine Schnittansicht einer alternativen Ausführungsform einer Filterkartusche 1. Auch diese Filterkartusche 1 weist einen Einlauf 5 und einen Auslauf 8 auf, welcher als Strömungsumkehr ausgebildet ist.

Im Unterschied zum zuvor dargestellten Ausführungsbeispiel sind erste 3 und zweite Kammer 4 durch einen Steg 18 vollständig voneinander getrennt und können so mit unterschiedlichen Filtermedien gefüllt werden.

Weiter erstreckt sich bei diesem Ausführungsbeispiel der Griff 6 über den Kartuschenkopf mit dem Einlauf 5 hinaus. Dies ermöglicht auf der einen Seite eine bessere Handhabbarkeit. Auf der anderen Seite wird gegenüber dem zuvor dargestellten Ausführungsbeispiel, bei welchem sich der Griff bis maximal zur Höhe des Einlaufs erstreckt, die Bauhöhe der Filterkartusche 1 vergrößert.

Es versteht sich, dass die Erfindung nicht auf eine Kombination vorstehend beschriebener Merkmale beschränkt ist, sondern dass der Fachmann sämtliche Merkmale, soweit dies sinnvoll ist, in beliebiger Kombination verwenden würde.

### Bezugszeichenliste

- 1: Filterkartusche
- 2: Gehäuse
- 3: erste Kammer
- 4: zweite Kammer
- 5: Einlauf
- 6: Griff
- 7: Dichtung
- 8: Auslauf
- 9: weitere Kammer
- 10: äußeres Gehäuse
- 11: inneres Gehäuse
- 12: Boden des inneren Gehäuses
- 13: Boden des äußeren Gehäuses
- 14: weiterer Einlauf
- 15: Rinne
- 16: Saugheber
- 17: Kanal
- 18: Steg

## Patentansprüche

1. Filterkartusche (1) für eine Wasserfiltervorrichtung, umfassend ein Gehäuse (2) mit zumindest einem Einlauf (5) und zumindest einem Auslauf (8), wobei zwischen Einlauf (5) und Auslauf (8) Mittel zur Strömungsumkehr vorgesehen sind **dadurch gekennzeichnet, dass** der Auslauf (8) zumindest 2 mm über einem Boden (13) der Filterkartusche (1) angeordnet ist und als nicht über den Boden (13) der Filterkartusche (1) hinausragende Röhre ausgebildet ist, über welche Wasser aus der Filterkartusche (1) ausgeleitet wird.

2. Filterkartusche (1) nach einem der vorstehenden Ansprüche, **dadurch gekennzeichnet, dass** das Gehäuse (2) zumindest eine umlaufende Dichtung (7) aufweist.

3. Filterkartusche (1) nach dem vorstehenden Anspruch, **dadurch gekennzeichnet, dass** das Gehäuse (2) unterhalb der umlaufenden Öffnung geschlossen ist.

4. Filterkartusche (1) nach einem der vorstehenden Ansprüche, **dadurch gekennzeichnet, dass** im Gehäuse (2) der Filterkartusche (1) zwischen den Mitteln zur Strömungsumkehr und dem Auslauf eine Kammer (9) angeordnet ist.

5. Filterkartusche (1) für eine Wasserfiltervorrichtung nach einem der vorstehenden Ansprüche, **dadurch gekennzeichnet, dass** die Filterkartusche (1) zumindest zwei Kammern (3, 4) aufweist, welche zumindest abschnittsweise getrennt sind.

6. Filterkartusche (1) für eine Wasserfiltervorrichtung nach einem der vorstehenden Ansprüche, **dadurch gekennzeichnet, dass** über dem Einlauf (5) und/oder über dem Auslauf (8) oder zwischen dem Einlauf (5) und dem Auslauf (8) zumindest eine Kammer (9) mit einem Medium zur Abgabe von Ionen, Geschmacksstoffen und/oder Spurenelementen angeordnet ist.

7. Filterkartusche (1) für eine Wasserfiltervorrichtung nach einem der vorstehenden Ansprüche, **dadurch gekennzeichnet, dass** die Filterkartusche (1) einen Saugheber (16) aufweist.

8. Filterkartusche (1) für eine Wasserfiltervorrichtung nach einem der vorstehenden Ansprüche, **dadurch gekennzeichnet, dass** unterhalb des Einlaufs (5) ein weiterer Einlauf (14) angeordnet ist.

9. Filterkartusche (1) für eine Wasserfiltervorrichtung nach einem der vorstehenden Ansprüche, **dadurch gekennzeichnet, dass** zumindest am Auslauf (8) ein Originalitätsverschluss angeordnet ist.

10. Filterkartusche (1) für eine Wasserfiltervorrichtung nach einem der vorstehenden Ansprüche, wobei die Filterkartusche (1) ein mit einem Filtermedium gefülltes Gehäuse (2) aufweist, **dadurch gekennzeichnet, dass** das Filtermedium Mineralstoffe und/oder Spurenelemente, insbesondere Kalzium und/oder Magnesium abgibt.

11. Filterkartusche (1) für eine Wasserfiltervorrichtung nach einem der vorstehenden Ansprüche, wobei die Filterkartusche (1) zumindest ein mit einem Filtermedium gefülltes Gehäuse (2) aufweist, **dadurch gekennzeichnet, dass** in Strömungsrichtung nach dem mit dem Filtermedium gefüllten Gehäuse eine Kammer (9), welche vom Wasser durchflossen wird, angeordnet ist.

12. Filterkartusche (1) für eine Wasserfiltervorrichtung nach einem der vorstehenden Ansprüche, wobei die Filterkartusche (1) zumindest ein mit einem Filtermedium gefülltes Gehäuse (2) aufweist, **dadurch gekennzeichnet, dass** das Gehäuse (2) zumindest zwei im Wesentlichen nebeneinander anordnete Zylinder oder Kegelstümpfe umfasst, welche sich abschnittsweise überschneiden.

## Claims

1. A filter cartridge (1) for a water filtration device, comprising a housing (2) having at least one inlet (5) and at least one outlet (8), wherein means for flow reversal are provided between the inlet (5) and the outlet (8); **characterized in that** the outlet (8) is arranged at least 2 mm above a bottom (13) of the filter cartridge (1) and is in the form of a tube which does not protrude beyond the bottom (13) of the filter cartridge (1), via which water is discharged from the filter cartridge (1).

2. The filter cartridge (1) according to the preceding claim, **characterized in that** the housing (2) has at least one circumferential seal (7).

3. The filter cartridge (1) according to the preceding claim, **characterized in that** the housing (2) is closed below the circumferential opening.

4. The filter cartridge (1) according to any one of the preceding claims, **characterized in that** a chamber (9) is arranged in the housing (2) of the filter cartridge (1) between the flow reversal means and the outlet.

5. The filter cartridge (1) for a water filtration device according to any one of the preceding claims, **characterized in that** the filter cartridge (1) includes at least two chambers (3, 4) which are at least partially separated.

6. The filter cartridge (1) for a water filtration device according to any one of the preceding claims, **characterized in that** at least one chamber (9) including a medium for release of ions, flavors, and/or trace elements is arranged above the inlet (5) and/or above the outlet (8) or between the inlet (5) and the outlet (8) .

7. The filter cartridge (1) for a water filtration device according to any one of the preceding claims, **characterized in that** the filter cartridge (1) has a siphon (16).

8. The filter cartridge (1) for a water filtration device according to any one of the preceding claims, **characterized in that** a further inlet (14) is arranged below the inlet (5).

9. The filter cartridge (1) for a water filtration device according to any one of the preceding claims, **characterized in that** a tamper-evident closure is arranged at least on the outlet (8).

10. The filter cartridge (1) for a water filtration device according to any one of the preceding claims, wherein the filter cartridge (1) comprises a housing (2) filled with a filter medium, **characterized in that** the filter medium releases minerals and/or trace elements, in particular calcium and/or magnesium.

11. The filter cartridge (1) for a water filtration device according to any one of the preceding claims, wherein the filter cartridge (1) comprises at least one housing (2) filled with a filter medium, **characterized in that** downstream of the housing filled with the filter medium, a chamber (9) is arranged, through which the water passes.

12. The filter cartridge (1) for a water filtration device according to any one of the preceding claims, wherein the filter cartridge (1) comprises at least one housing (2) filled with a filter medium, **characterized in that** the housing (2) comprises at least two cylinders or truncated cones arranged substantially adjacent to each other and overlapping in sections.

## Revendications

1. Cartouche filtrante (1) pour un dispositif de filtration d'eau, comprenant un boîtier (2) pourvu d'au moins une entrée (5) et d'au moins une sortie (8), dans lequel des moyens d'inversion d'écoulement sont prévus entre l'entrée (5) et la sortie (8), **caractérisée en ce que** la sortie (8) est agencée à au moins 2 mm au-dessus d'un fond (13) de la cartouche filtrante (1) et est réalisée sous la forme de tubes ne faisant pas saillie du fond (13) de la cartouche filtrante (1), par l'intermédiaire desquels l'eau est évacuée de la cartouche filtrante (1).

2. Cartouche filtrante (1) selon l'une quelconque des revendications précédentes, **caractérisée en ce que** le boîtier (2) présente au moins un joint (7) périphérique.

3. Cartouche filtrante (1) selon la revendication précédente, **caractérisée en ce que** le boîtier (2) est fermé au-dessous de l'ouverture périphérique.

4. Cartouche filtrante (1) selon l'une quelconque des revendications précédentes, **caractérisée en ce qu'**une chambre (9) est agencée dans le boîtier (2) de la cartouche filtrante (1) entre les moyens d'inversion d'écoulement et la sortie.

5. Cartouche filtrante (1) pour un dispositif de filtration d'eau selon l'une quelconque des revendications précédentes, la cartouche filtrante (1) étant **caractérisée en ce qu'**elle comprend au moins deux chambres (3, 4), lesquelles sont au moins en partie séparées.

6. Cartouche filtrante (1) pour un dispositif de filtration d'eau selon l'une quelconque des revendications précédentes, **caractérisée en ce qu'**au moins une chambre (9) pourvue d'un milieu permettant la délivrance d'ions, d'aromatisants et/ou d'oligo-éléments est agencée au-dessus de l'entrée (5) et/ou au-dessus de la sortie (8) ou entre l'entrée (5) et la sortie (8).

7. Cartouche filtrante (1) pour un dispositif de filtration d'eau selon l'une quelconque des revendications précédentes, la cartouche filtrante (1) étant **caractérisée en ce qu'**elle présente un siphon (16).

8. Cartouche filtrante (1) pour un dispositif de filtration d'eau selon l'une quelconque des revendications précédentes, **caractérisé en ce qu'**une autre entrée (14) est agencée au-dessous de l'entrée (5).

9. Cartouche filtrante (1) pour un dispositif de filtration d'eau selon l'une quelconque des revendications précédentes, **caractérisée en ce qu'**une fermeture inviolable est agencée au moins sur la sortie (8).

10. Cartouche filtrante (1) pour un dispositif de filtration d'eau selon l'une quelconque des revendications précédentes, la cartouche filtrante (1) présentant un boîtier (2) rempli d'un milieu filtrant, **caractérisée en ce que** le milieu filtrant délivre des minéraux et/ou des oligo-éléments, en particulier du calcium et/ou du magnésium.

11. Cartouche filtrante (1) pour un dispositif de filtration d'eau selon l'une quelconque des revendications précédentes, la cartouche filtrante (1) présentant au moins un boîtier (2) rempli d'un milieu filtrant, **caractérisée en ce qu'**une chambre (9), laquelle est traversée par de l'eau, est agencée dans le sens d'écoulement à la suite du boîtier rempli du milieu filtrant.

12. Cartouche filtrante (1) pour un dispositif de filtration d'eau selon l'une quelconque des revendications précédentes, la cartouche filtrante (1) présentant au moins un boîtier (2) rempli d'un milieu filtrant, **caractérisée en ce que** le boîtier (2) comporte au moins deux cylindres ou cônes tronqués sensiblement agencés l'un à côté de l'autre, lesquels se chevauchent sur certaines parties.
